# EUROPÄISCHE PATENTSCHRIFT

(11) **EP 2 254 738 B1**
(45) Veröffentlichungstag und Bekanntmachung des Hinweises auf die Patenterteilung: **23.11.2011**
(21) Anmeldenummer: 09716808.2
(22) Anmeldetag: 04.03.2009
(51) Int. Cl.: B29C 33/30, B29D 30/06

(54) **VERFAHREN UND VORRICHTUNG ZUR HALTERUNG VON FORMEN**
METHOD AND DEVICE FOR MOUNTING FORMS
PROCÉDÉ ET DISPOSITIF DE POSITIONNEMENT DE MOULES

(30) Priorität: 04.03.2008 DE 102008012850
(43) Veröffentlichungstag der Anmeldung: 01.12.2010
(73) Patentinhaber: Harburg-Freudenberger Maschinenbau GmbH, 21079 Hamburg (DE)
(72) Erfinder: BAHLKE, Stefan, 29493 Schnakenburg (DE)
(74) Vertreter: Klickow, Hans-Henning
(86) Internationale Anmeldenummer: PCT/DE2009/000320
(87) Internationale Veröffentlichungsnummer: WO 2009/109184

(56) Entgegenhaltungen:
- EP-A- 0 685 320
- EP-A- 1 637 304
- JP-A- 9 029 752
- JP-U- 6 029 815
- US-A- 4 773 839
- US-A- 5 820 886

## Beschreibung

Die Erfindung betrifft ein Verfahren zur Halterung einer Form einer Heizpresse für Reifen aus einem elastomeren Material, bei dem Formsegmente lösbar von einer Trageinrichtung gehaltert werden.

Die Erfindung betrifft darüber hinaus eine Vorrichtung zur Halterung einer Form einer Heizpresse für Reifen aus einem elastomeren Material, bei der Formsegmente lösbar von einer Trageinrichtung gehaltert sind.

Schließlich betrifft die Erfindung eine Heizpresse, die mit der vorstehend erwähnten Vorrichtung ausgestattet ist.

Eine Heizpresse für Reifen besitzt typischerweise ein stationäres Sockelteil sowie ein gegenüber dem Sockelteil positionierbares Kopfteil. Am Kopfteil sind die Formhälften gehaltert. Die Formhälften sind quer zur Hubrichtung des Pressenkopfes positionierbar, um den Reifenrohling aufzunehmen und den fertig vulkanisierten Reifen wieder freizugeben. Nach einem vollständigen Öffnen der Form wird diese in vertikaler Richtung angehoben, um ein seitliches Entnehmen des fertigen Reifens zu unterstützen.

Die verwendeten Formsegmente sind lösbar am Kopfteil der Presse angeordnet. Typischerweise erfolgt dies unter Verwendung eines Führungselementes, in dem die Formsegmente relativ zueinander positionierbar gelagert sind. Das Führungselement kann beispielsweise als ein sogenannter Container oder als ein C-artiges Profil ausgebildet sein, das zur Aufnahme von Schließkräften ausgebildet ist. Bei der Durchführung des vulkanisiervorganges wird das Führungselement typischerweise gegen eine Heizplatte gezogen, um eine entsprechende Temperierung zu unterstützen. Das Führungselement wird in der Regel unter Verwendung von Schrauben am Kopfteil der Presse fixiert. Bei einem Wechsel der Formsegmente müssen die in der Regel heißen Schrauben gelöst und dann die neuen Formsegmente wieder festgeschraubt werden. Die entsprechende Zeitdauer des Formwechselns führt zu einer entsprechenden Produktionsunterbrechung. Die Schrauben sind darüber hinaus häufig nur schlecht zugänglich.

Aus der EP 1 637 304 A ist bereits eine Heizpresse bekannt, bei der eine Form für die Reifen lösbar von einer Trageinrichtung gehaltert wird und bei der die Form aus Formsegmenten besteht.

Eine weitere Heizpresse mit lösbar von einer Trageinrichtung gehalterten Formsegmenten wird auch in der JP 06029815 U beschrieben.

Aufgabe der vorliegenden Erfindung ist es, ein Verfahren der einleitend genannten Art derart zu verbessern, daß ein schnelles Formwechseln bei gleichzeitig hoher Betriebssicherheit unterstützt wird.

Diese Aufgabe wird erfindungsgemäß dadurch gelöst, daß mit einem Halterungsprofil versehene Halterungsbolzen eines die Formsegmente lagernden Führungselementes durch eine Einführausnehmung eines im Bereich der Trageinrichtung angeordneten Fixierelementes hindurch geführt werden und daß anschließend ein Arretierelement des Fixierelementes quer zu einer Längsrichtung des Halterungsbolzens positioniert wird und daß das Halterungsprofil hierdurch gegenüber dem Fixierelement arretiert wird und daß vor der Durchführung der Querpositionierung des Arretierelementes ein das Fixierelement in Längsrichtung des Halterungsbolzens verstellendes Spannelement von einer Stelleinrichtung entgegen einer Federkraft verschoben und anschließend durch die Federkraft zurückgestellt wird, um das Halterungsprofil des Halterungsbolzens im Bereich des Fixierelementes durch Formschluß zu haltern.

Weitere Aufgabe der vorliegenden Erfindung ist es, eine Vorrichtung der einleitend genannten Art derart zu gestalten, daß ein schnelles Formwechseln bei hoher Betriebssicherheit unterstützt wird.

Diese Aufgabe wird erfindungsgemäß dadurch gelöst, daß mit einem Halterungsprofil versehene Halterungsbolzen eines die Formsegmente lagernden Führungselementes durch eine Einführausnehmung eines im Bereich der Trageinrichtung angeordneten Fixierelementes hindurchführbar sind und daß ein Arretierelement des Fixierelementes quer zu einer Längsrichtung des Halterungsbolzens positionierbar ist und daß das Halterungsprofil durch die Positionierung des Arretierelementes gegenüber dem Fixierelement arretierbar ist und daß das Fixierelement in Längsrichtung des Halterungsbolzens von einem Spannelement verstellbar ist und das Spannelement von einer Stelleinrichtung entgegen einer Federkraft mindestens einer Feder verschieblich und durch die Federkraft der Feder zurückstellbar angeordnet ist und daß in der zurückgestellten Positionierung das Halterungsprofil des Halterungsbolzens im Bereich des Fixierelementes durch Formschluß gehaltert ist.

Durch den Eingriff der Halterungsbolzen in das Fixierelement ist es in einfacher Weise möglich, sowohl ein Arretieren als auch ein Entriegeln vorzunehmen. Nach einer Entspannung des Spannelementes braucht lediglich das Arretierelement des Fixierelementes verschoben zu werden, um die Halterungsbolzen entweder zu fixieren oder freizugeben.

Die vorliegende Erfindung ermöglicht es insbesondere, die Durchführung der Hubbewegung zum Anheben der geöffneten Form, die Verspannung der Formen zwischen der Heizplatte und dem Pressensockel und die Durchführung einer Entspannung im Bereich der Fixierelemente vor einem Lösen der Halterungsbolzen über ein gemeinsames Stellelement, typischerweise einen Hydraulikzylinder, durchzuführen. Es wird hierdurch ein einfacher und betriebssicherer Grundaufbau bereitgestellt.

Durch die Realisierung der vorliegenden Erfindung wird die gemäß dem Stand der Technik zur lösbaren Halterung der Formsegmente erforderliche zusätzliche Formadapterplatte bzw. zusätzliche Pneumatikzylinder oder zusätzliche Hydraulikzylinder vermieden. Darüber hinaus wird das Auftreten eines Spaltes zwischen der verwendeten Heizplatte und der Form vermieden und es können bei einer geeigneten Gestaltung des Fixierelementes Befestigungen mit unterschiedlichen Halteelementen ausgestellter Formen ermöglicht werden. Es liegt somit keine Beschränkung auf einen einzigen fest vorgegebenen Formbefestigungslochkreis vor.

Eine Verwendung des Hauptzylinders der Heizpresse und somit die Vermeidung eines zusätzlichen Stellelementes wird dadurch ermöglicht, daß die Stelleinrichtung für das Spannelemente hydraulisch angetrieben wird.

Zwei unterschiedliche Arbeitspositionierungen für den Hydraulikzylinder können dadurch vorgegeben werden, daß die Stelleinrichtung vor einer Verspannung des Spannelementes um ihre Längsachse herum verdreht wird.

Eine einfache Positionierung wird dadurch unterstützt, daß die Drehbewegung von einem Pneumatikzylinder vorgegeben wird.

Eine einfache Durchführung des Verriegelungsvorganges sowie eines Entriegelungsvorganges wird dadurch ermöglicht, daß das Arretierelement des Fixierelementes von einem Pneumatikzylinder verstellt wird.

Eine zuverlässige Halterung der Formsegmente sowie ein wirksames verspannen gegenüber einer Heizplatte werden dadurch unterstützt, daß eine Mehrzahl von Fixierelementen relativ zueinander beabstandet und mit ihren jeweiligen Längsachsen in einer radialen Richtung auf einer Längsachse der Stelleinrichtung ausgerichtet werden.

Eine gleichmäßige Krafteinleitung wird dadurch ermöglicht, daß die Fixierelemente bezüglich der Längsachse in einer Umfangsrichtung relativ zueinander im wesentlichen äquidistant angeordnet werden.

Eine kompakte Konstruktion der Arretierungselemente wird dadurch unterstützt, daß das Arretierelement von einem pneumatischen Antrieb positioniert wird.

Eine robuste und mechanisch stabile Konstruktion wird dadurch erreicht, daß der Halterungsbolzen bei einer Positionierung des Arretierelementes mit einem Schaft innerhalb eines Schlitzes des Arretierelementes positioniert wird.

Eine verschleißarme Übertragung hoher Spannkräfte wird dadurch erleichtert, daß entlang des Schlitzes mindestens eine an den Bolzenkopf angepaßte Halterungsausnehmung positioniert wird.

Eine zuverlässige Arretierung kann dadurch gewährleistet werden, daß eine Arretierungspositionierung von mindestens einem Sicherheitsschalter überwacht wird.

Zur Bereitstellung unterschiedlicher Formbefestigungslochkreise wird vorgeschlagen, daß durch eine Positionierung des Arretierelementes mindestens zwei unterschiedliche Verriegelungspositionen vorgebbar sind.

In den Zeichnungen sind Ausführungsbeispiele der Erfindung schematisch dargestellt. Es zeigen:
- Fig. 1: einen Vertikalschnitt durch eine teilweise dargestellte Reifenheizpresse,
- Fig. 2: eine Seitenansicht des oberen Pressenteiles gemäß Fig. 1,
- Fig. 3: eine vergrößerte Seitenansicht eines verriegelungsbolzens,
- Fig. 4: eine perspektivische Darstellung eines Fixierelementes und
- Fig. 5: eine Draufsicht auf Fig. 4 mit in einer radialen Richtung äquidistant angeordneten Fixierelementen.

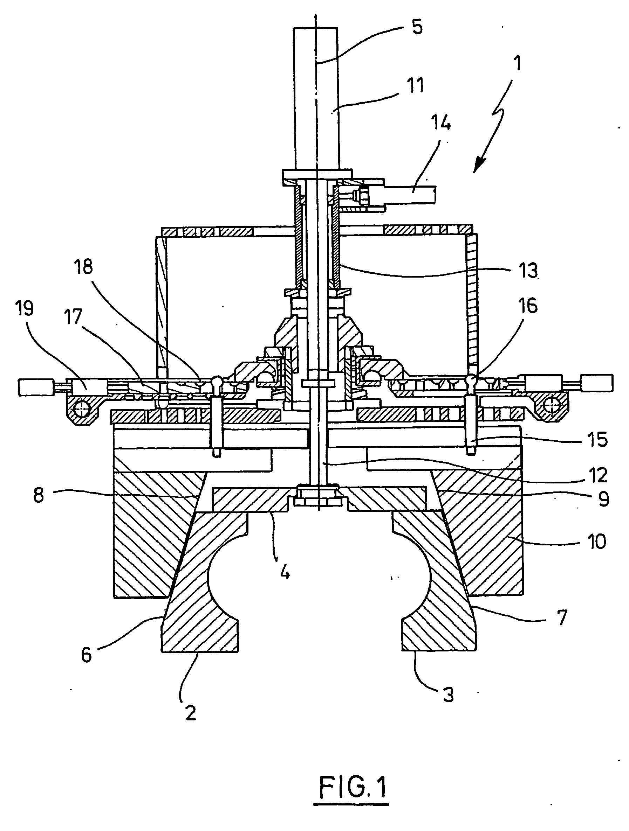

Gemäß der Ausführungsform in Fig. 1 ist eine Heizpresse (1) mit Formsegmenten (2, 3) ausgestattet, die im Bereich eines Trägers (4) quer zu einer Längsachse (5) positionierbar angeordnet sind. Die Formsegmente (2, 3) weisen außenseitig Positionierschrägen (6, 7) auf, die korrespondierend mit zugeordneten Stellschrägen (8, 9) einer zugeordneten Grundplatte (10) zusammenwirken. Eine Positionierung der Formsegmente (2, 3) in Richtung der Längsachse (5) führt hierdurch zu einer Zwangspositionierung durch das Zusammnenwirken der Positionierschrägen (6, 7) und der Stellschrägen (8, 9).

Zur Durchführung der Positionierbewegung ist der Träger (4) mit einem Hydraulikzylinder (11) gekoppelt. Eine Kolbenstange (12) des Hydraulikzylinders (11) erstreckt sich wenigstens bereichsweise durch ein Führungsrohr (13) hindurch. Unter Verwendung eines Pneumatikzylinders (14) ist der Hydraulikzylinder (11) zumindest bereichsweise um die Längsachse (5) herum verdrehbar angeordnet.

Der Träger (4) ist mit Halterungsbolzen (15) versehen, die mit Bolzenköpfen (16) in Fixierelemente (17) eingreifen. Die Bolzenköpfe (16) stellen hierbei Halterungsprofile bereit, die in Halterungsausnehmungen (18) der Fixierelemente (17) einführbar sind. Insbesondere erweist es sich als zweckmäßig, die Bolzenköpfe (16) mit einer gerundeten Kontur zu versehen und in gerundete muldenartige Halterungsausnehmungen (18) einzuführen.

Im Bereich der Fixierelemente (17) angeordnete Arretierelemente (27) sind quer zur Längsachse (5) von Stellelementen (19) positionierbar. Insbesondere ist daran gedacht, die Stellelemente (19) als Pneumatikzylinder auszubilden.

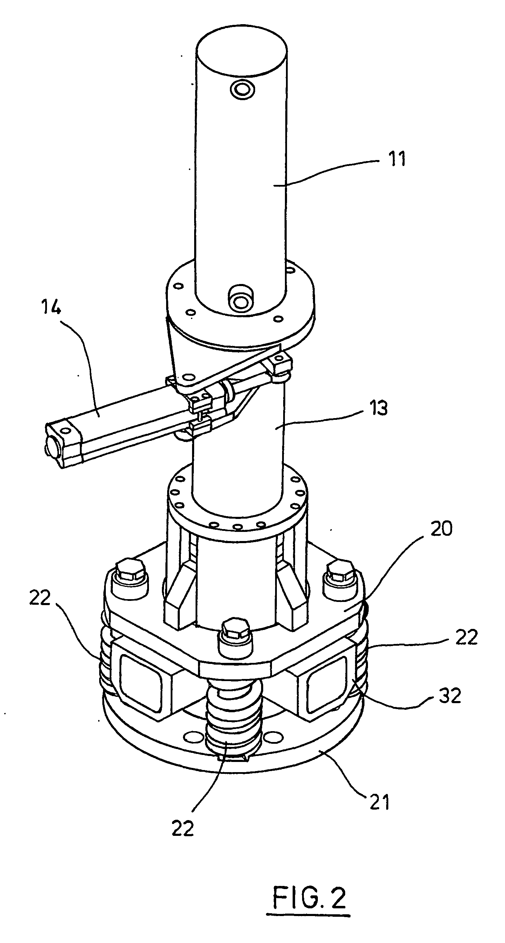

Fig. 2 zeigt eine Seitenansicht des in Fig. 1 dargestellten oberen Teiles der Heizpresse (1). Zu erkennen ist insbesondere der Hydraulikzylinder (11) sowie der am Führungsrohr (13) befestigte Pneumatikzylinder (14). Das Führungsrohr (13) ist relativ zu einem Pressengestell unbeweglich angeordnet, so daß eine Positionierbewegung des Pneumatikzylinders (14) eine Drehbewegung des Hydraulikzylinders (11) verursacht. Grundsätzlich können statt des Pneumatikzylinders (14) auch andere Stellelemente verwendet werden.

Zwischen zwei Andruckplatten (20, 21) sind Federn (22) angeordnet, die unter Verwendung des Hydraulikzylinders (11) gespannt oder entspannt werden-können.

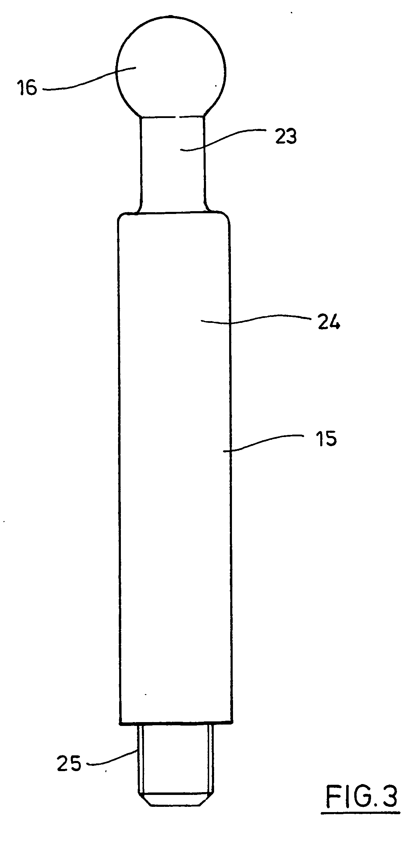

Fig. 3 zeigt eine vergrößerte Seitenansicht des Halterungsbolzens (15). Der Halterungsbolzen (15) ist mit einem gerundet konturierten Bolzenkopf (16) versehen, der über einen Schaft (23) mit einem Hauptkörper (24) des Halterungsbolzens (15) verbunden ist. Über ein Außengewinde (25) kann der Halterungsbolzen (15) im Bereich der Grundplatte (10) fixiert werden.

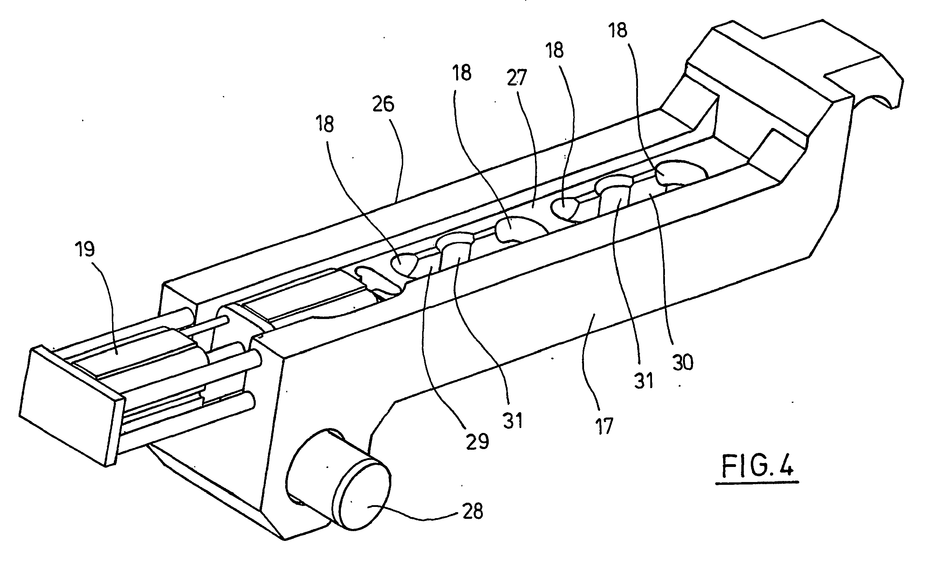

Fig. 4 zeigt eine vergrößerte perspektivische Darstellung eines der Fixierelemente (17). Das Fixierelement (17) weist einen Rahmen (26) auf, der das Stellelement (19) sowie ein Arretierelement (27) trägt. Unter Verwendung des Stellelementes (19) ist das Arretierelement (27) relativ zum Rahmen (26) verschieblich. Der Rahmen (26) ist über ein Schwenkgelenk (28) drehbeweglich gelagert.

Aus Fig. 4 ist zu erkennen, daß die Halterungsausnehmungen (18) im Bereich des Arretierelementes (27) angeordnet sind. Beim dargestellten Ausführungsbeispiel weist das Arretierelement (27) zwei Schlitze (29, 30) auf, die jeweils mit einer Einführausnehmung (31) versehen sind. Die Einführausnehmung (31) weist einen Durchmesser auf, der mindestens einem Außendurchmesser des Bolzenkopfes (16) entspricht. Eine Breite des Schaftes (23) des Halterungsbolzens (15) ist etwas geringer als eine Breite der Schlitze (29, 30) dimensioniert. Gemäß dem Ausführungsbeispielen in Fig. 4 sind im Bereich jedes der Schlitze (29, 30) zwei Halterungsausnehmungen (18) angeordnet.

Zur Durchführung eines Arretiervorganges wird zunächst der Halterungsbolzen (15) mit seinem Bolzenkopf (16) durch die Einführausnehmungen (31) hindurch geführt. Anschließend erfolgt eine Querpositionierung des Arretierelementes (27) derart, daß der Bolzenkopf (16) im Bereich einer der Halterungsausnehmungen (18) angeordnet ist. In diesem Zustand wird das Fixierelement (17) relativ zum Bolzenkopf (16) verspannt. Eine Entriegelung erfolgt in umgekehrter Reihenfolge.

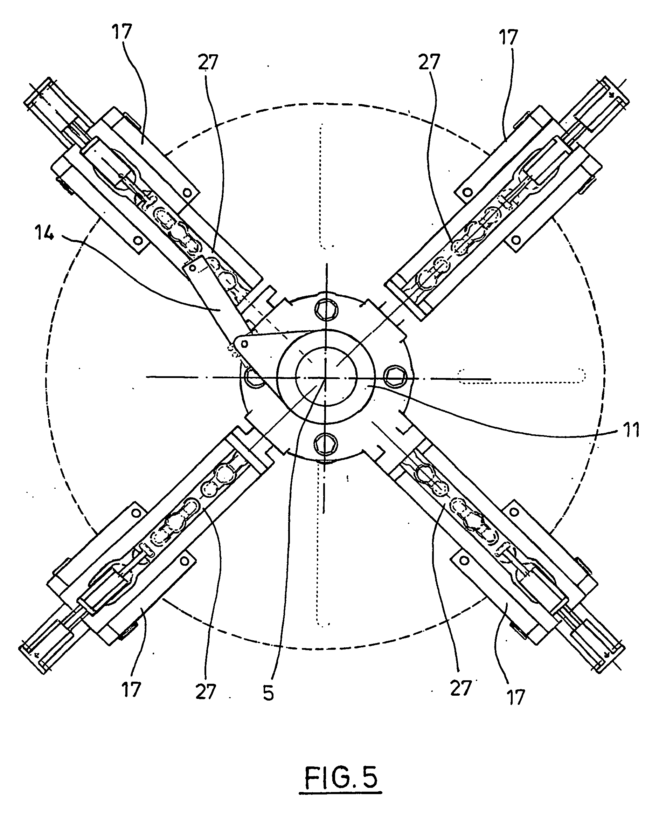

Gemäß der Ausführungsform in Fig. 5 sind bezüglich der Längsachse (5) in einer Umfangsrichtung (4) Fixierelemente (17) relativ zueinander im wesentlichen äquidistant angeordnet. Zu erkennen ist ebenfalls der Pneumatikzylinder (14) zur Verstellung des Hydraulikzylinders (11).

Nachfolgend wird die Funktion der Verriegelung näher erläutert. Bei einem Schließen der Heizpresse (1) fahren die Halterungsbolzen (15) mit ihren Bolzenköpfen (16) durch die Einführausnehmungen (31) der Fixierelemente (17) hindurch. Anschließend wird das Arretierelement (27) unter Verwendung des Stellelementes (19) bezüglich der Längsachse (5) in einer radialen Richtung verschoben, so daß die Halterungsausnehmung (18) im Bereich des kugelartigen Bolzenkopfes (16) positioniert ist und hierdurch den Bolzenkopf (16) blockiert. Das Erreichen einer Verriegelungsposition des Arretierelementes (27) kann unter Verwendung von Sicherheitsschaltern abgefragt werden. Die Anzahl der vorgesehenen Halterungsausnehmungen (18) definiert die Anzahl der möglichen Befestigungslochkreise.

Nach dieser Positionierung der Arretierelemente (27) relativ zu den Bolzenköpfen (16) wird der Hydraulikzylinder (11) in seine Ausgangslage zurückgefahren und die Federn (22) verspannen die Andruckplatten (20, 21) relativ zueinander. Aufgrund der Kopplung mit den Fixierelementen (17) erfolgt hierdurch auch eine Verspannung der Halterungsausnehmungen (18) relativ zu den Bolzenköpfen (16). Der Hydraulikzylinder (11) wird anschließend unter Verwendung des Pneumatikzylinders (14) in seiner Arbeitsposition gedreht und steht zum Öffnen und Schließen der Formsegmente (2, 3) zur Verfügung. Aufgrund der erfolgten Verspannung wird die Form gegen die Heizplatte gepreßt.

Eine Hubbewegung der Andruckplatte (20) kann gemäß der Ausführungsform in Fig. 2 unter Verwendung von Hohlprofilen (32) auf die Stellelemente (19) übertragen werden. Die Stellelemente (19) greifen hierbei mit Endabschnitten in die Hohlprofile (32) ein.

Durch das Verdrehen des Hydraulikzylinders (11) unter Verwendung des Pneumatikzylinders (14) ist es möglich, den Hydraulikzylinder (11) nach einem Verdrehen über entsprechende Kopplungsprofile auf die obere Andruckplatte (20) einwirken zu lassen und bei einer anschließenden Hubbewegung die Andruckplatte (20) gegen die Andruckplatte (21) zu verschieben und hierdurch die Federn (22) zu spannen und gleichzeitig die Fixierelemente (17) um die Schwenkgelenke (28) herum in Richtung auf die Heizplatte zu verschwenken. Nach einem Abschluß des Verriegelungsvorganges und nach einem zurückfahren des Hydraulikzylinders (11) führen die Federn (22) ohne weitere äußere Einwirkung die erforderliche Verspannung durch. Nach einem Zurückdrehen des Hydraulikzylinders (11) in die Arbeitsposition liegt kein weiterer Formschluß mit der Andruckplatte (20) vor, so daß das Öffnen und Schließen der Heizpresse (1) in üblicher Weise durchgeführt werden kann.

## Patentansprüche

1. Verfahren zur Halterung einer Form einer Heizpresse (1) für Reifen aus einem elastomeren Material, bei dem Formsegmente (2, 3) lösbar von einer Trageinrichtung gehaltert werden, **dadurch gekennzeichnet, daß** mit einem Halterungsprofil versehene Halterungsbolzen (15) eines die Formsegmente (2, 3) lagernden Führungselementes durch eine Einführausnehmung (31) eines im Bereich der Trageinrichtung angeordneten Fixierelementes (17) hindurch geführt werden und daß anschließend ein Arretierelement (27) des Fixierelementes (17) quer zu einer Längsrichtung des Halterungsbolzens (15) positioniert wird und daß das Halterungsprofil hierdurch gegenüber dem Fixierelement (17) arretiert wird und daß vor der Durchführung der Querpositionierung des Arretierelementes (27) ein das Fixierelement (17) in Längsrichtung des Halterungsbolzens verstellendes Spannelement von einer Stelleinrichtung entgegen einer Federkraft (22) verschoben und anschließend durch die Federkraft (22) zurückgestellt wird, um das Halterungsprofil des Halterungsbolzens (15) im Bereich des Fixierelementes (17) durch Formschluß zu haltern.

2. Verfahren nach Anspruch 1, **dadurch gekennzeichnet, daß** die Stelleinrichtung für das Spannelemente hydraulisch angetrieben wird.

3. Verfahren nach Anspruch 1 oder 2, **dadurch gekennzeichnet, daß** die Stelleinrichtung vor einer Verspannung des Spannelementes um ihre Längsachse herum verdreht wird.

4. Verfahren nach Anspruch 3, **dadurch gekennzeichnet, daß** die Drehbewegung von einem Pneumatikzylinder vorgegeben wird.

5. Verfahren nach einem der Ansprüche 1 bis 4, **dadurch gekennzeichnet, daß** das Arretierelement (27) des Fixierelementes (17) von einem Pneumatikzylinder verstellt wird.

6. Verfahren nach einem der Ansprüche 1 bis 5, **dadurch gekennzeichnet, daß** eine Mehrzahl von Fixierelementen (17) relativ zueinander beabstandet und mit ihren jeweiligen Längsachsen in einer radialen Richtung auf eine Längsachse der Stelleinrichtung ausgerichtet werden.

7. Verfahren nach Anspruch 6, **dadurch gekennzeichnet, daß** die Fixierelemente bezüglich der Längsachse in einer Umfangsrichtung relativ zueinander im wesentlichen äquidistant angeordnet werden.

8. Verfahren nach einem der Ansprüche 1 bis 7, **dadurch gekennzeichnet, daß** das Arretierelement (27) von einem pneumatischen Antrieb positioniert wird.

9. Verfahren nach einem der Ansprüche 1 bis 8, **dadurch gekennzeichnet, daß** der Halterungsbolzen (15) bei einer Positionierung des Arretierelementes (27) mit einem Schaft (23) innerhalb eines Schlitzes (29, 30) des Arretierelementes (27) positioniert wird.

10. Verfahren nach einem der Ansprüche 1 bis 9, **dadurch gekennzeichnet, daß** entlang des Schlitzes (29, 30) mindestens eine an den Bolzenkopf (16) angepaßte Halterungsausnehmung (18) positioniert wird.

11. Verfahren nach einem der Ansprüche 1 bis 10, **dadurch gekennzeichnet, daß** eine Arretierungspositionierung von mindestens einem Sicherheitsschalter überwacht wird.

12. Verfahren nach einem der Ansprüche 1 bis 11, **dadurch gekennzeichnet, daß** durch eine Positionierung des Arretierelementes (27) mindestens zwei unterschiedliche Verriegelungspositionen vorgebbar sind.

13. Vorrichtung zur Halterung einer Form einer Heizpresse (1) für Reifen aus einem elastomeren Material, bei der Formsegmente (2, 3) lösbar von einer Trageinrichtung gehaltert sind, **dadurch gekennzeichnet, daß** mit einem Halterungsprofil versehene Halterungsbolzen (15) eines die Formsegmente (2, 3) lagernden Führungselementes durch eine Einführausnehmung (31) eines im Bereich der Trageinrichtung angeordneten Fixierelementes (17) hindurchführbar sind und daß ein Arretierelement (27) des Fixierelementes (17) quer zu einer Längsrichtung des Halterungsbolzens (15) positionierbar ist und daß das Halterungsprofil durch die Positionierung des Arretierelementes (27) gegenüber dem Fixierelement (17) arretierbar ist und daß das Fixierelement (17) in Längsrichtung des Halterungsbolzens (15) von einem Spannelement verstellbar ist und das Spannelement von einer Stelleinrichtung entgegen einer Federkraft mindestens einer Feder (22) verschieblich und durch die Federkraft der Feder zurückstellbar angeordnet ist und daß in der zurückgestellten Positionierung das Halterungsprofil des Halterungsbolzens (15) im Bereich des Fixierelementes (17) durch Formschluß gehaltert ist.

14. Vorrichtung nach Anspruch 13, **dadurch gekennzeichnet, daß** die Stelleinrichtung für das Spannelement als ein Hydraulikzylinder ausgebildet ist.

15. Vorrichtung nach Anspruch 13 oder 14, **dadurch gekennzeichnet, daß** der Hydraulikzylinder relativ zu einer Längsachse verdrehbar angeordnet ist.

16. Vorrichtung nach einem der Ansprüche 13 bis 15, **dadurch gekennzeichnet, daß** zur Verdrehung des Hydraulikzylinders (11) ein Pneumatikzylinder (14) verwendet ist.

17. Vorrichtung nach einem der Ansprüche 13 bis 16, **dadurch gekennzeichnet, daß** das Arretierelement (27) mit einem Positionierelement gekoppelt ist.

18. Vorrichtung nach einem der Ansprüche 13 bis 17, **dadurch gekennzeichnet, daß** mehrere Fixierelemente (17) mit ihren jeweiligen Längsachsen in einer radialen Richtung auf eine Längsachse des Hydraulikzylinders (11) ausgerichtet sind.

19. Vorrichtung nach einem der Ansprüche 13 bis 18, **dadurch gekennzeichnet, daß** die Fixierelemente (17) bezüglich der Längsachse des Hydraulikzylinders (11) in einer Umfangsrichtung im wesentlichen äquidistant relativ zueinander angeordnet sind.

20. Vorrichtung nach einem der Ansprüche 13 bis 19, **dadurch gekennzeichnet, daß** das Positionierelement für das Arretierelement (27) als ein Pneumatikzylinder ausgebildet ist.

21. Vorrichtung nach einem der Ansprüche 13 bis 20, **dadurch gekennzeichnet, daß** das Arretierelement (27) mindestens einen Schlitz (29, 30) aufweist, in den eine Einführausnehmung (31) einmündet und entlang dessen mindestens eine Halterungsausnehmung (18) für den Bolzenkopf (16) angeordnet ist.

22. Vorrichtung nach einem der Ansprüche 13 bis 21, **dadurch gekennzeichnet, daß** der Bolzenkopf (16) mindestens bereichsweise gerundet ausgebildet und an eine gerundete muldenförmige Kontur der Halterungsausnehmung (18) angepaßt ist.

23. Vorrichtung nach einem der Ansprüche 13 bis 22, **dadurch gekennzeichnet, daß** das Arretierelement (27) mit mindestens einem Sicherheitsschalter gekoppelt ist.

24. Vorrichtung nach einem der Ansprüche 13 bis 23, **dadurch gekennzeichnet, daß** das Arretierelement (27) mindestens zwei unterschiedliche Arretierpositionen aufweist.

## Claims

1. A method for mounting a form of a heating press (1) for tyres made of an elastomer material, in which form segments (2, 3) are releasably held by a supporting device, **characterised in that** mounting bolts (15), provided with a mounting profile, of a guide element carrying the form segments (2, 3) are guided through an insertion recess (31) of a fixing element (17) arranged in the region of the supporting device and **in that** a locking element (27) of the fixing element (17) is then positioned transversely to a longitudinal direction of the mounting bolt (15) and **in that** the mounting profile is thus locked with respect to the fixing element (17) and **in that**, before the transverse positioning of the locking element (27) is carried out, a clamping element adjusting the fixing element (17) in the longitudinal direction of the mounting bolt is displaced in opposition to a spring force (22) by an adjusting device and then reset by the spring force (22) in order to mount the mounting profile of the mounting bolt (15) in the region of the fixing element (17) by form fit.

2. A method according to Claim 1, **characterised in that** the adjusting device for the clamping element is driven hydraulically.

3. A method according to Claim 1 or 2, **characterised in that** the adjusting device is rotated about its longitudinal axis before the clamping element is braced.

4. A method according to Claim 3, **characterised in that** the rotational movement is predetermined by a pneumatic cylinder.

5. A method according to one of Claims 1 to 4, **characterised in that** the locking element (27) of the fixing element (17) is adjusted by a pneumatic cylinder.

6. A method according to one of Claims 1 to 5, **characterised in that** a plurality of fixing elements (17) are spaced relative to one another and aligned with their respective longitudinal axes in a radial direction relative to a longitudinal axis of the adjusting device.

7. A method according to Claim 6, **characterised in that** the fixing elements are arranged substantially equidistant relative to one another in a circumferential direction with regard to the longitudinal axis.

8. A method according to one of Claims 1 to 7, **characterised in that** the locking element (27) is positioned by a pneumatic drive.

9. A method according to one of Claims 1 to 8, **characterised in that**, when positioning the locking element (27), the mounting bolt (15) is positioned with a shaft (23) inside a slot (29, 30) of the locking element (27).

10. A method according to one of Claims 1 to 9, **characterised in that** at least one mounting recess (18) adapted to the bolt head (16) is positioned along the slot (29, 30).

11. A method according to one of Claims 1 to 10, **characterised in that** locking positioning is monitored by at least one safety switch.

12. A method according to one of Claims 1 to 11, **characterised in that** at least two different locking positions may be predetermined by positioning the locking element (27).

13. A device for mounting a form of a heating press (1) for tyres made of an elastomer material, in which form segments (2, 3) are releasably held by a supporting device, **characterised in that** mounting bolts (15), provided with a mounting profile, of a guide element carrying the form segments (2, 3) may be guided through an insertion recess (31) of a fixing element (17) arranged in the region of the supporting device and **in that** a locking element (27) of the fixing element (17) may be positioned transversely to a longitudinal direction of the mounting bolt (15) and **in that** the mounting profile may be locked with respect to the fixing element (17) by positioning the locking element (27) and **in that** the fixing element (17) may be adjusted in the longitudinal direction of the mounting bolt (15) by a clamping element and the clamping element is arranged to be displaceable in opposition to a spring force of at least one spring (22) by an adjusting device and to be resettable by the spring force of the spring and **in that**, in the reset position, the mounting profile of the mounting bolt (15) is held in the region of the fixing element (17) by form fit.

14. A device according to Claim 13, **characterised in that** the adjusting device for the clamping element is constructed as a hydraulic cylinder.

15. A device according to Claim 13 or 14, **characterised in that** the hydraulic cylinder is arranged to be rotatable relative to a longitudinal axis.

16. A device according to one of Claims 13 to 15, **characterised in that** a pneumatic cylinder (14) is used to rotate the hydraulic cylinder (11).

17. A device according to one of Claims 13 to 16, **characterised in that** the locking element (27) is coupled to a positioning element.

18. A device according to one of Claims 13 to 17, **characterised in that** a plurality of fixing elements (17) are aligned with their respective longitudinal axes in a radial direction relative to a longitudinal axis of the hydraulic cylinder (11).

19. A device according to one of Claims 13 to 18, **characterised in that** the fixing elements (17) are arranged substantially equidistant relative to one another in a circumferential direction with regard to the longitudinal axis of the hydraulic cylinder (11).

20. A device according to one of Claims 13 to 19, **characterised in that** the positioning element for the locking element (27) is constructed as a pneumatic cylinder.

21. A device according to one of Claims 13 to 20, **characterised in that** the locking element (27) has at least one slot (29, 30) into which an insertion recess (31) leads and along which at least one mounting recess (18) for the bolt head (16) is arranged.

22. A device according to one of Claims 13 to 21, **characterised in that** the bolt head (16) is of a rounded construction, at least over parts thereof, and is adapted to a rounded trough-shaped contour of the mounting recess (18).

23. A device according to one of Claims 13 to 22, **characterised in that** the locking element (27) is coupled to at least one safety switch.

24. A device according to one of Claims 13 to 23, **characterised in that** the locking element (27) has at least two different locking positions.

## Revendications

1. Procédé de fixation d'un moule dans une presse à chaud (1) pour pneumatiques en matière élastomère, dans lequel des segments de moule (2, 3) sont fixés de manière amovible dans un système de support, **caractérisé en ce que** des boulons de fixation (15) d'un élément de guidage, qui positionne les segments de moule (2, 3), sont pourvus d'un profilé de fixation et conduits à travers un évidement de passage (31) d'un élément de fixation (17), qui est disposé dans la zone d'un système de support, et qu'un élément de blocage (27) de l'élément de fixation (17) est ensuite positionné perpendiculairement à une direction longitudinale du boulon de fixation (15), et que, avant le positionnement transversal de l'élément de blocage (27), un élément de serrage, qui déplace l'élément de fixation (17) dans la direction longitudinale du boulon de fixation, est poussé par un dispositif de réglage contre une force élastique (22) et rappelé ensuite par ladite force élastique (22), pour maintenir, par emboîtement, le profilé de fixation du boulon de fixation) 15) dans la zone de l'élément de fixation (17).

2. Procédé selon la revendication 1, **caractérisé en ce que** le dispositif de réglage des éléments de serrage est entraîné hydrauliquement.

3. Procédé selon revendication 1 ou 2, **caractérisé en ce que** le dispositif de réglage exécute une rotation sur son axe longitudinal avant un serrage de l'élément de serrage.

4. Procédé selon la revendication 3, **caractérisé en ce que** le mouvement de rotation est déterminé par un cylindre pneumatique.

5. Procédé selon l'une des revendications 1 à 4, **caractérisé en ce que** l'élément de blocage (27) de l'élément de fixation (17) est déplacé par un cylindre pneumatique.

6. procédé selon l'une des revendications 1 à 5, **caractérisé en ce que** plusieurs éléments de fixation (17) sont disposés à distance les uns des autres et sont, avec leur axe longitudinal respectif, dirigés, radialement sur un axe longitudinal du dispositif de réglage.

7. Procédé selon la revendication 6, **caractérisé en ce que**, par rapport à l'axe longitudinal, les éléments de fixation sont disposés, sensiblement à distance équivalente les uns des autres, dans une direction périphérique.

8. Procédé selon l'une des revendications 1 à 7, **caractérisé en ce que** l'élément de blocage (27) est positionné par un dispositif d'entraînement pneumatique.

9. Procédé selon l'une des revendications 1 à 8, **caractérisé en ce que**, lors d'un positionnement de l'élément de blocage (27), le boulon de fixation (15) est positionné, avec une tige (23), à l'intérieur d'une fente (29, 30) de l'élément de blocage (27).

10. procédé selon l'une des revendications 1 à 9, **caractérisé en ce que**, le long de la fente (29, 30), est positionné au moins un évidement de fixation (18), qui est adapté à la tête de boulon (16).

11. Procédé selon l'une des revendications 1 à 10, **caractérisé en ce qu'**un positionnement de blocage est surveillé par au moins un commutateur de sécurité.

12. Procédé selon l'une des revendications 1 à 11, **caractérisé en ce que**, par un positionnement de l'élément de blocage (27), au moins deux positions de verrouillage peuvent être prédéterminées.

13. Dispositif de fixation d'une moule dans une presse à chaud (1) pour pneumatiques en matière élastomère, dans lequel des segments de moule (2, 3) sont fixés de manière amovible dans un système de support, **caractérisé en ce que** des boulons de fixation (15), pourvus d'un profilé de fixation, d'un élément de guidage, qui positionne les segments de moule (2, 3), sont conduits à travers un évidement de passage (31) d'un élément de fixation (17), qui est disposé dans la zone du système de support, et qu'un élément de blocage (27) de l'élément de fixation (17) peut être positionné perpendiculairement à une direction longitudinale du boulon de fixation (15), et que le profilé de fixation peut être bloqué par rapport à l'élément de fixation (17), par le positionnement de l'élément de blocage (27), et que l'élément de fixation (17) peut être déplacé dans la direction longitudinale du boulon de fixation (15) d'un élément de serrage, et que l'élément de serrage peut être déplacé par un dispositif de réglage, contre la force élastique d'au moins un ressort (22) et rappelé par la force élastique dudit ressort, et que, dans la position rappelée, le profilé de fixation du boulon de fixation (15) est maintenu par emboîtement géométrique dans la région de l'élément de fixation (17).

14. Dispositif selon la revendication 13, **caractérisé en ce que** le dispositif de réglage de l'élément de serrage est conçu en tant que cylindre hydraulique.

15. Dispositif selon revendication 13 ou 14, **caractérisé en ce que** le cylindre hydraulique est agencé à rotation par rapport à un axe longitudinal.

16. dispositif selon l'une des revendications 13 à 15, **caractérisé en ce que**, pour la rotation du cylindre hydraulique (11), on utilise un cylindre pneumatique (14).

17. Dispositif selon l'une des revendications 13 à 16, **caractérisé en ce que** l'élément de blocage (27) est couplé avec l'élément de positionnement.

18. Dispositif selon l'une des revendications 13 à 17, **caractérisé en ce que** plusieurs éléments de fixation (17) sont dirigés radialement, avec leurs axes longitudinaux respectifs, sur un axe longitudinal du cylindre hydraulique (11).

19. Dispositif selon l'une des revendications 13 à 18, **caractérisé en ce que**, par rapport à l'axe longitudinal du cylindre hydraulique (11), les éléments de fixation (17) sont disposés sensiblement à distance équivalente les uns des autres, dans une direction périphérique.

20. dispositif selon l'une des revendications 13 à 19, **caractérisé en ce que** l'élément de positionnement de l'élément de blocage (27) est conçu en tant que cylindre pneumatique.

21. Dispositif selon l'une des revendications 13 à 20, **caractérisé en ce que** l'élément de blocage (27) est doté d'au moins une fente (29, 30), dans laquelle débouche une cavité d'entrée (31), et le long de laquelle au moins une cavité de fixation (18) est aménagée pour la tête de boulon (16).

22. Dispositif selon l'une des revendications 13 à 21, **caractérisé en ce que** la tête de boulon (16) est arrondie, au moins par sections, et est adaptée à un contour incurvé, arrondi de la cavité de fixation (18).

23. Dispositif selon l'une des revendications 13 à 22, **caractérisé en ce que** l'élément de blocage (27) est couplé avec au moins un commutateur de sécurité.

24. dispositif selon l'une des revendications 13 à 22, **caractérisé en ce que** l'élément de blocage (27) est doté d'au moins deux positions de blocage différentes.
